# EUROPEAN PATENT APPLICATION

(11) **EP 1 612 749 A2**
(43) Date of publication of application: **04.01.2006**
(21) Application number: 05254086.1
(22) Date of filing: 29.06.2005
(51) Int. Cl.: G08B 6/00

(54) **Tactile communication method**

(30) Priority: 30.06.2004 US 881907
(71) Applicant: Avaya Technology Corp., Basking Ridge, New Jersey 07920-2332 (US)
(72) Inventor: Seligmann, Doree Duncan, New York, New York 10021 (US); Moody, Taryn, Atlantic Highlands New Jersey 07716 (US)
(74) Representative: McCallum, Graeme David

(57) **Abstract**

A method and apparatus are disclosed for vibrating a telecommunications terminal that receives a call or message in accordance with a sequence of pulses that is based on one or more attributes of the associated incoming call or message. In particular, the illustrative embodiment varies at least one of: the number of pulses in the sequence, the durations of pulses, the intensity of pulses, and the tempo with which the sequence occurs. Attributes of the incoming call or message include who the caller is, a message priority, a message subject, and the location from which the call was placed. The present invention thus enables a telecommunications terminal in vibrate mode to impart information about the nature of an incoming call or message to the terminal's user without the user having to view the terminal's display.

## Description

The present invention relates to telecommunications in general, and, more particularly, to techniques for intelligently vibrating a telecommunications terminal that receives a call.

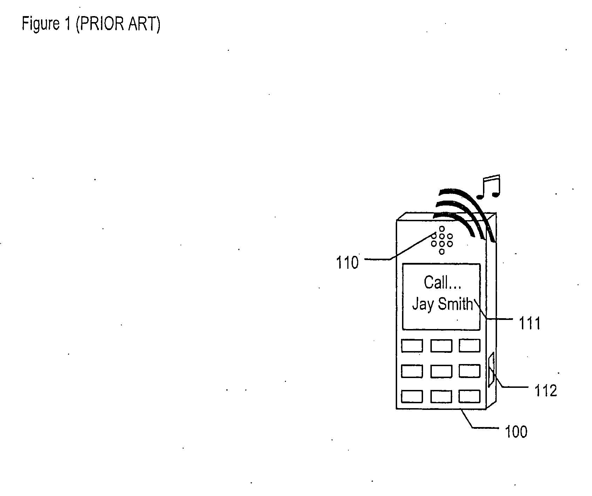

Figure 1 depicts telecommunications terminal 100 (*e.g*., a wireless telephone, a personal digital assistant [PDA], *etc*.) in accordance with the prior art. Telecommunications terminal 100 receives one or both of incoming calls (*e.g*., voice telephone calls, video conference calls, *etc*.) and incoming messages (*e.g*., email messages, Short Message Service [SMS] messages, Multimedia Message Service [MMS] messages *etc*.) and notifies the user of the terminal of the arrival of an incoming call or message via one or more sensory mechanisms. As shown in Figure 1, telecommunications terminal 100 comprises speaker 110 (*i*.*e*., an acoustic transducer) for playing "ringtones" (*e*.*g*., a musical composition, a sound effect, *etc*.), display 111 (*i.e.,* a visual transducer) for displaying text or images, and vibration mechanism 112 for generating mechanical vibrations (*e.g*., via an electric motor, *etc*.).

The user of telecommunications terminal 100 typically can specify which sensory mechanism, or combination of sensory mechanisms, is used to notify him or her of the arrival of an incoming message. Speaker 110, when enabled, typically generates a ringtone; display 111, when enabled, typically displays a text message or an image; and vibration mechanism 112, when enabled, vibrates telecommunications terminal 100.

When vibration mechanism 112 is enabled (*i.e*., telecommunications terminal 100 is in "vibrate mode"), the user of telecommunications terminal 100 typically has the terminal on his or her person (*e.g*., in a pocket, attached to a belt, *etc*.) so that he or she can feel the vibration when a call or message is received. Vibration mechanism 112 is typically desirable in venues in which an acoustic alert might be disruptive and a visual alert might be either disruptive or un-noticed by the user (*e.g*., a movie theater, a concert hall, a church, *etc*.)

The present invention enables the manner in which a telecommunications terminal vibrates to vary based on one or more attributes of the associated incoming call or message. In particular, in the illustrative embodiment a telecommunications terminal, upon receiving an incoming call or message, vibrates in accordance with a sequence of pulses, wherein the nature of the sequence of pulses (*i.e*., the number of pulses and the relative durations of the pulses), and possibly the intensity and tempo of the sequence of pulses, are based on one or more attributes of the incoming call or message (*e.g*., who the caller is, a priority associated with the message, a subject associated with the message, the location from which the call was placed, *etc*.).

The present invention thus enables a telecommunications terminal in vibrate mode to impart information about the nature of an incoming call or message to the user. This can be particularly useful in a variety of scenarios. For example, suppose Dr. Newman, while attending a concert with his telecommunications terminal in his pocket in vibrate mode, receives an incoming call. If the manner in which the terminal vibrates indicates that the call is from the hospital, he immediately leaves the concert auditorium for the lobby in order to take the call, thereby causing minimal disruption. However, if the manner in which the terminal vibrates indicates that the call is not urgent, Dr. Newman ignores the call, thereby avoiding the potentially-disruptive action of taking the terminal out of his pocket and viewing the display to ascertain information about the call (*e.g*., who the caller is, *etc*.).

A sequence of vibratory pulses can impart information to the user of a telecommunications terminal in a variety of ways. For example:
- a series of short pulses might indicate that an incoming email message has a high priority,
- the caller's name might be "spelled out" via pulses that correspond to a code (*e.g*., Morse code, *etc*.),
- a single long pulse might indicate that a call is from a business client, while a series of shorter pulses might indicate that a call is from a person other than a business client,
- the intensity of vibration of pulses might indicate the priority of an incoming email message,
- a sequence of pulses that occurs at a fast tempo might indicate that the subject of an incoming email message matches a list of urgent subjects, or
- a first pulse sequence might indicate that a call is coming from the East coast of the United States, and a second pulse sequence might indicate that a call is coming from the West coast.

The illustrative embodiment comprises: (a) receiving a call at a telecommunications terminal; and (b) vibrating the telecommunications terminal in accordance with a sequence of pulses that is based on an attribute of the call to notify the user of the telecommunications terminal of the arrival of the call.

Figure 1 depicts a telecommunications terminal in the prior art.

Figure 2 depicts a telecommunications terminal in accordance with the illustrative embodiment of the present invention.

Figure 3 depicts a block diagram of the salient components of telecommunications terminal 200, as shown in Figure 2, in accordance with the illustrative embodiment of the present invention.

Figure 4 depicts a flowchart of the operation of telecommunications terminal 200, as shown in Figure 2, upon receiving an incoming call or message, in accordance with the illustrative embodiment of the present invention.

Figure 5 depicts a detailed flowchart of task 450, as shown in Figure 4, in accordance with the illustrative embodiment of the present invention.

The terms appearing below are given the following definitions for use in this Description and the appended Claims.

For the purposes of the specification and claims, the term **"call"** is defined as a signal sent from a first telecommunications to a second telecommunications terminal that indicates the intention to initiate a dialogue between the terminals. A call might be a traditional voice telephone call, an invitation to participate in an Instant Messaging (IM) session, an invitation to participate in a video conference call, *etc*.

For the purposes of the specification and claims, the term **"message"** is defined as an information-bearing signal sent from a first telecommunications to a second telecommunications terminal. A message might be an email message, a Short Message Service (SMS) message, a Multimedia Message Service (MMS) message, an audio clip, a video clip, etc. In contrast to a call, a message does not establish or attempt to establish a dialogue.

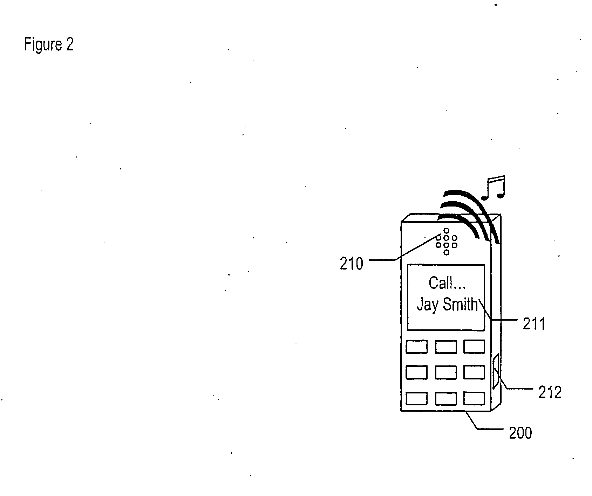

Figure 2 depicts telecommunications terminal 200 in accordance with the illustrative embodiment of the present invention. As shown in Figure 2, telecommunications terminal 200 comprises speaker 210, display 211, and vibration mechanism 212.
Speaker 210, like speaker 110 of telecommunications terminal 100, is capable of generating acoustic signals (*e.g*., ringtones, *etc*.) in well-known fashion. Display 211, like display 111 of telecommunications terminal 100, is capable of displaying visual signals (*e.g*., text, images, *etc*.) in well-known fashion. Vibration mechanism 212 is capable of vibrating telecommunications terminal 200 in the same fashion as vibration mechanism 112 vibrates telecommunications terminal 100 (e.g., via an electric motor, *etc*.).

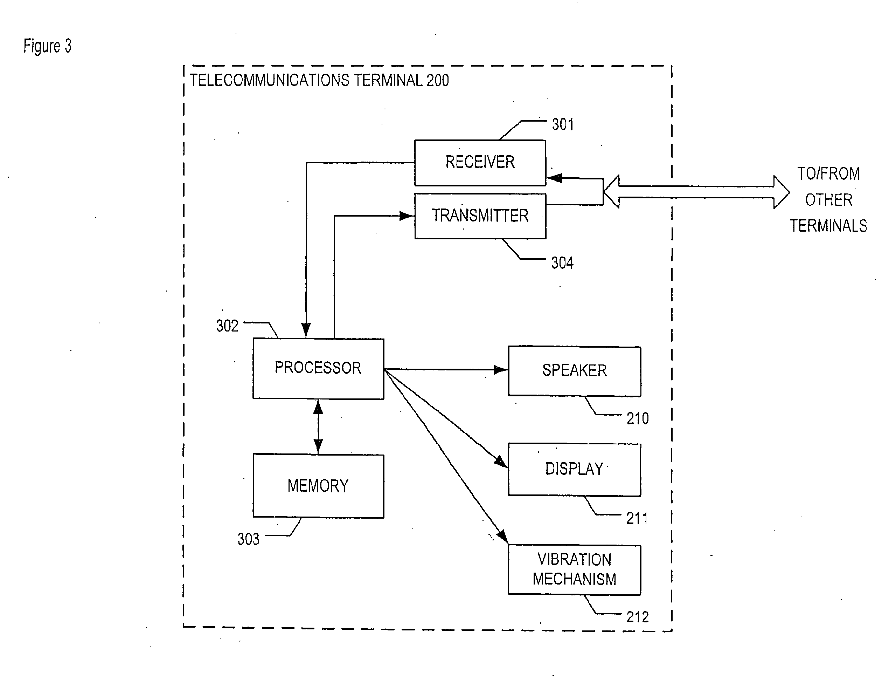

Figure 3 depicts a block diagram of the salient components of telecommunications terminal 200, in accordance with the illustrative embodiment of the present invention. As shown in Figure 3, telecommunications terminal 200 comprises receiver 301, processor 302, memory 303, transmitter 304, speaker 210, display 211, and vibration mechanism 212, interconnected as shown.

Receiver 301 receives signals sent from other telecommunications terminals (*e.g*., via the Public Switched Telephone Network [PSTN], via the Internet, via a Code Division Multiple Access [CDMA] base station, via an 802.11 wireless access point, *etc*.) and forwards the information encoded in these signals to processor 302, in well-known fashion. It will be clear to those skilled in the art, after reading this disclosure, how to make and use receiver 301.

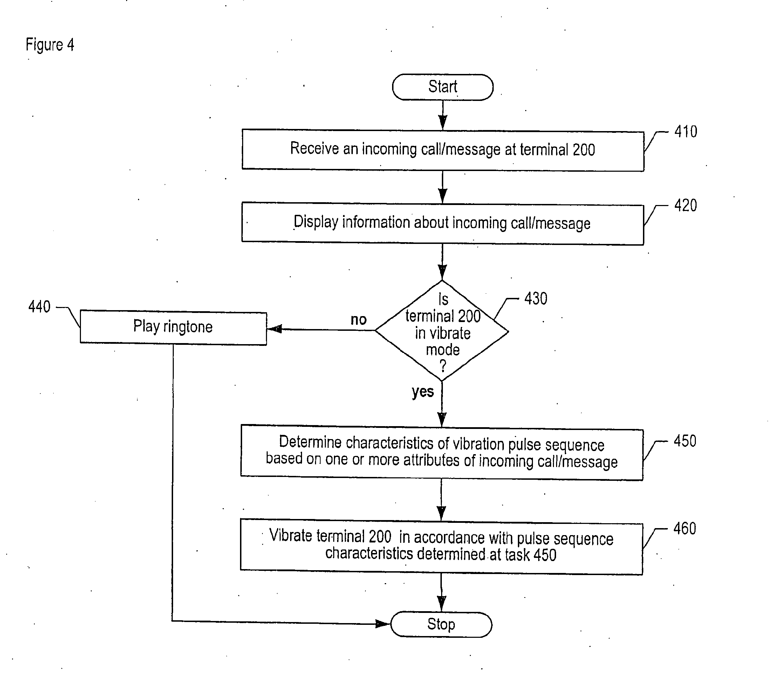

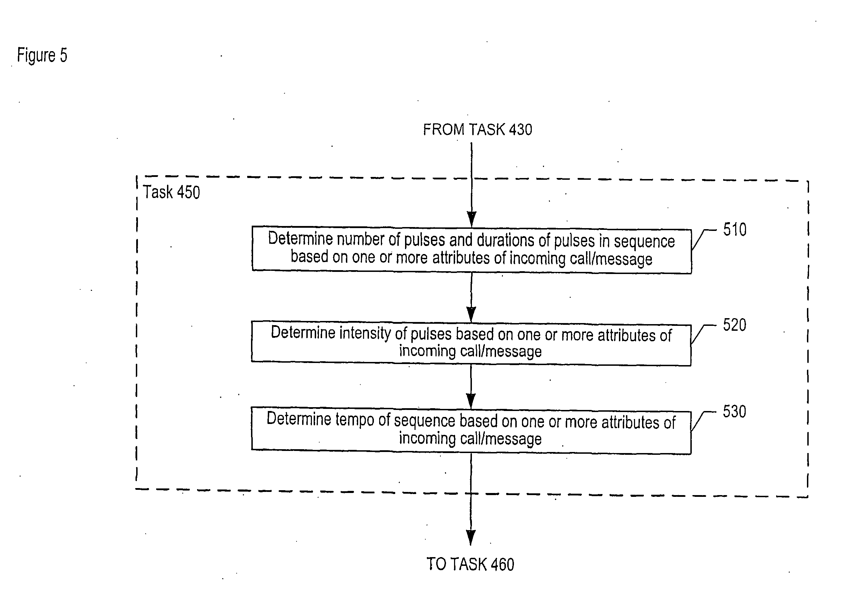

Processor 302 is a general-purpose processor that is capable of reading data from and writing data into memory 303, of sending signals to speaker 210, display 211, and vibration mechanism 212 in well-known fashion, and of executing the tasks described below and with respect to Figures 4 and 5. In some alternative embodiments of the present invention, processor 302 might be a special-purpose processor. In either case, it will be clear to those skilled in the art, after reading this disclosure, how to make and use processor 302.

Memory 303 stores data and executable instructions, as is well-known in the art, and might be any combination of random-access memory (RAM), flash memory, disk drive, *etc*. It will be clear to those skilled in the art, after reading this disclosure, how to make and use memory 303.

Transmitter 304 receives information from processor 302 and transmits signals that encode this information to other telecommunications terminals (*e.g*., via the Public Switched Telephone Network [PSTN], via the Internet, via a Code Division Multiple Access [CDMA] base station, via an 802.11 wireless access point, *etc*.) in well-known fashion. It will be clear to those skilled in the art, after reading this disclosure, how to make and use transmitter 304.

Figure 4 depicts a flowchart of the operation of telecommunications terminal 200 upon receiving an incoming call or message, in accordance with the illustrative embodiment of the present invention. It will be clear to those skilled in the art which tasks depicted in Figure 4 can be performed simultaneously or in a different order than that depicted.

At task 410, receiver 301 of telecommunications terminal 200 receives an incoming call or message and forwards the call or message to processor 302, in well-known fashion.

At task 420, processor 302 sends a signal to display 211 to display information about the incoming call or message (*e.g*., who the caller is, what the subject of an incoming email is, *etc*.) in well-known fashion. As will be appreciated by those skilled in the art, in some embodiments task 420 might not be performed for some or all incoming calls or messages.

At task 430, processor 302 performs a branch statement based on whether telecommunications terminal 200 is in vibrate mode. If telecommunications terminal 200 is not in vibrate mode, execution continues at task 440, otherwise execution proceeds to task 450.

At task 440, processor 302 sends a signal to speaker 210 to play a ringtone to notify the user of the incoming call or message, in well-known fashion. After task 440, the method of Figure 4 terminates.

At task 450, processor 302 determines characteristics of a sequence of vibratory pulses based on one or more attributes of the incoming call or message, as described in detail below and with respect to Figure 5. The sequence of vibratory pulses will be used both to notify the user of the incoming call or message, and to impart information about the incoming call or message to the user.

At task 460, processor 302 sends one or more signals to vibration mechanism 212 to vibrate telecommunications terminal 200 in accordance with the pulse sequence characteristics determined at task 440, in well-known fashion. After task 460, the method of Figure 4 terminates.

Figure 5 depicts a detailed flowchart of task 450, in accordance with the illustrative embodiment of the present invention. It will be clear to those skilled in the art which tasks depicted in Figure 5 can be performed simultaneously or in a different order than that depicted.

At task 510, processor 302 determines the number of pulses in the pulse sequence, and the durations of pulses in the sequence, based on one or more attributes of the incoming call or message (*e.g*., who the caller is, a priority, a subject, the location from which the call or message was sent [when indicated in the call or message], *etc*.). As described above, the number of pulses and the durations of the pulses (which might be expressed as relative durations or absolute durations) can be varied accordingly to impart information about the call or message to the user of telecommunications terminal 200. As will be appreciated by those skilled in the art, in some embodiments the information about the incoming call or message might be explicitly provided in the call or message itself, or might be inferred by processor 302 based on an attribute of the call or message, while in some other embodiments the information might be received via receiver 301 (*e.g*., from a remote server, *etc*.). As will also be appreciated by those skilled in the art, in some embodiments processor 302 might determine other parameters such as the repetition rate of the sequence of pulses and the "duty cycle" (*i.e*., the percentage of time that terminal 200 vibrates).

At task 520, processor 302 determines the intensity of pulses based on one or more attributes of the incoming call or message. As described above, a higher pulse intensity might indicate a higher message priority, an urgent message subject, an important caller, *etc*.

At task 530, processor 302 determines the tempo at which the sequence of pulses will occur based on one or more attributes of the incoming call or message. As described above, a faster tempo might indicate a higher message priority, an urgent message subject, an important caller, *etc*.

After task 530, execution of task 450 is complete and execution proceeds to task 460, as described above.

It is to be understood that the above-described embodiments are merely illustrative of the present invention and that many variations of the above-described embodiments can be devised by those skilled in the art without departing from the scope of the invention. For example, in this Specification, numerous specific details are provided in order to provide a thorough description and understanding of the illustrative embodiments of the present invention. Those skilled in the art will recognize, however, that the invention can be practiced without one or more of those details, or with other methods, materials, components, *etc*.

Furthermore, in some instances, well-known structures, materials, or operations are not shown or described in detail to avoid obscuring aspects of the illustrative embodiments. It is understood that the various embodiments shown in the Figures are illustrative, and are not necessarily drawn to scale. Reference throughout the specification to "one embodiment" or "an embodiment" or "some embodiments" means that a particular feature, structure, material, or characteristic described in connection with the embodiment(s) is included in at least one embodiment of the present invention, but not necessarily all embodiments. Consequently, the appearances of the phrase "in one embodiment," "in an embodiment," or "in some embodiments" in various places throughout the Specification are not necessarily all referring to the same embodiment. Furthermore, the particular features, structures, materials, or characteristics can be combined in any suitable manner in one or more embodiments. It is therefore intended that such variations be included within the scope of the following claims and their equivalents.

## Claims

1. A method comprising:
(a) receiving a call at a telecommunications terminal; and
(b) vibrating said telecommunications terminal in accordance with a sequence of pulses that is based on an attribute of said call to notify the user of said telecommunications terminal of the arrival of said call.

2. The method of claim 1 wherein the intensity of said vibrating is based on an attribute of said call.

3. The method of claim 1 wherein the tempo of said sequence of pulses is based on an attribute of said call.

4. The method of claim 1 wherein each of said pulses has a respective duration.

5. The method of claim 4 wherein at least a portion of said sequence of pulses is in accordance with Morse Code.

6. The method of claim 1 wherein said attribute of said call is the caller.

7. The method of claim 1 wherein said attribute of said call is a user category associated with the caller.

8. The method of claim 1 wherein said attribute of said call is a priority.

9. The method of claim 1 wherein said attribute of said call is a subject.

10. The method of claim 1 wherein said attribute of said call is the location from which said call was placed.

11. A method comprising:
(a) receiving a message at a telecommunications terminal; and
(b) vibrating said telecommunications termina, in accordance with a sequence of pulses that is based on an attribute of said message, to notify the user of said telecommunications terminal of the arrival of said message;
wherein said sequence of pulses is independent of the contents of said message.

12. The method of claim 11 wherein the intensity of said vibrating is based on an attribute of said message.

13. The method of claim 11 wherein the speed of said sequence of pulses is based on an attribute of said message.

14. The method of claim 11 wherein each of said pulses has a respective duration.

15. The method of claim 14 wherein at least a portion of said sequence of pulses is in accordance with Morse Code.

16. The method of claim 11 wherein said attribute of said message is the sender of said message.

17. The method of claim 11 wherein said attribute of said message is a user category associated with the sender of said message.

18. The method of claim 11 wherein said attribute of said message is a priority.

19. The method of claim 11 wherein said attribute of said message is a subject.

20. The method of claim 11 wherein said attribute of said message is the location from which said message was sent.
